# EUROPEAN PATENT SPECIFICATION

(11) **EP 0 940 107 B1**
(45) Date of publication and mention of the grant of the patent: **24.01.2001**
(21) Application number: 99500022.1
(22) Date of filing: 09.02.1999
(51) Int. Cl.: A47J 27/092

(54) **Pressure-cooker with safety device for the cover**
Schnellkochtopf mit einer Sicherheitsvorrichtung für den Deckel
Auto-cuiseur avec un dispositif de sécurité pour le couvercle

(30) Priority: 02.03.1998 ES 9800575 U
(43) Date of publication of application: 08.09.1999
(73) Proprietor: FAGOR, S.Coop, 20500 Mondragon (Guipuzcoa) (ES)
(72) Inventor: Barrena Elorza, Joseba, 20500 Mondragon (Guipuzcoa) (ES)

(56) References cited:
- EP-A- 0 148 464
- EP-A- 0 281 646
- WO-A-85/03851
- DE-A- 3 623 546

## Description

### TECHNICAL FIELD OF THE INVENTION

This invention is related to a pressure-cooker for home cooking and, in particular, with a control and safety device.

### PRIOR ART

ES-8605963 (WO85/03851) describes a pressure-cooker of the type with two superimposed handles, on the cover and on the recipient, with a safety device operated by a control button which moves a blocking element forward to aid a valve rod which prevents the cover from being opened as long as there is any residual pressure in the recipient. Said safety device also prevents the pressure-cooker from being pressurised if the two handles are not correctly aligned since the block device cannot move forward to stop the cover from turning and the valve rod cannot be lifted to close the steam release opening on the cover. To open the pressure-cooker after cooking, the valve rod drops under its own weight from the block position and the control button can then be pulled back, the cover handle unlocks from the recipient and the cover can be turned.

The block component of the known device is L-shaped, with the longer arm placed horizontally above into which, in the "unblock" position, the valve rod is inserted to prevent the steam from lifting it while, on the contrary, in the "block" position, the block component superimposes an opening on the rod, through which the rising block rod passes. The block component cannot be operated as long as the handles are not correctly aligned, since the rotation of the cover must first be blocked. This is done with a stud associated with the control button which locks vertically in an opening in the lower handle.

Document EP-A-148464 which represents the closest prior art discloses a safety device for a pressure cooker with two superimposed handles, comprising a sliding control button, a blocking member housed in the upper handle and formed by a L-shaped operating member and a plate engaging the control button to pivot the operating member, which in turn, is provided with a locking appendix to be inserted into the cooker recipient for preventing the opening rotation of the cooker cover, a safety valve body interposed into the movement of the blocking member, and a pressure indicator rod.

ES-2053168 T3 (EP-0489012) has an L-shaped block component inside the cover handle and, to prevent the cover from turning, there is a further stud fitted on the block component and which locks into the edge of the recipient when moved by displacing said control button. The block stud remains locked in place under the force of a co-axial spring.

### DISCLOSURE OF THE INVENTION

The object of the invention is a safety device for a home pressure-cooker of the type with superimposed handles, on the cover and on the recipient, and with a control button that can be moved horizontally to prevent the cover from being opened as long as there is any residual pressure in the recipient, and to prevent pressurisation until the two handles are correctly aligned, as defined in claim 1.

Said block mechanism has a L-shaped member, with the longer arm horizontal and the shorter arm in the rear and downward. The longer arm of the block mechanism is interposed into the movement of the body of a cylindrical blocking valve which lifts under the pressure from the recipient to close the steam outlet on the cover, though without passing through the blocking mechanism. However, a pressure indicator rod has been added to the safety device, separated from the valve and impelled by it, which must run through the blocking mechanism and emerges above the handle, though without aiding the blocking function.

To prevent the cover from turning, the short arm of the block mechanism has an integrated appendix which emerges forward and enters the edge of the recipient.

An essential characteristic of the safety device is a catch to operate the control button on the upper handle which emerges laterally from the handle rather than below as in the known device, thus ensuring that it will not be moved by the user's hand but rather exclusively by contact with the lower handle until the two handles are completely superimposed.

The blocking mechanism also has two elastic surface flaps to provide an audible signal of the complete movement of the blocking mechanism.

The blocking mechanism thus is conformed with only two elements, the blocking component made of a single moulded part, with an alignment catch incorporated on the front, and the body of the blocking valve, the first of these being incorporated completely into the upper handle. This also simplifies construction of the block valve, enabling it to be used with other models of pressure-cooker.

### A DESCRIPTION OF THE DRAWINGS

Figure 1 is a partial view of a cross-section of the pressure-cooker according to the invention, showing the safety device to prevent the cover from being opened.
Figure 2 is an elevation view of the blocking mechanism of the safety device of the figure 1.
Figure 3 is a cross-sectional view of the blocking mechanism along the line III-III of the figure 2.
Figure 4 is a cross-sectional view along the line IV-IV of the figure 3.
Figure 5 is an elevation view of the block actuating member belonging to the blocking mechanism of the Figure 3.
Figure 6 is a plan view of the actuating member of the figure 5.

### DETAILED DESCRIPTION OF THE INVENTION

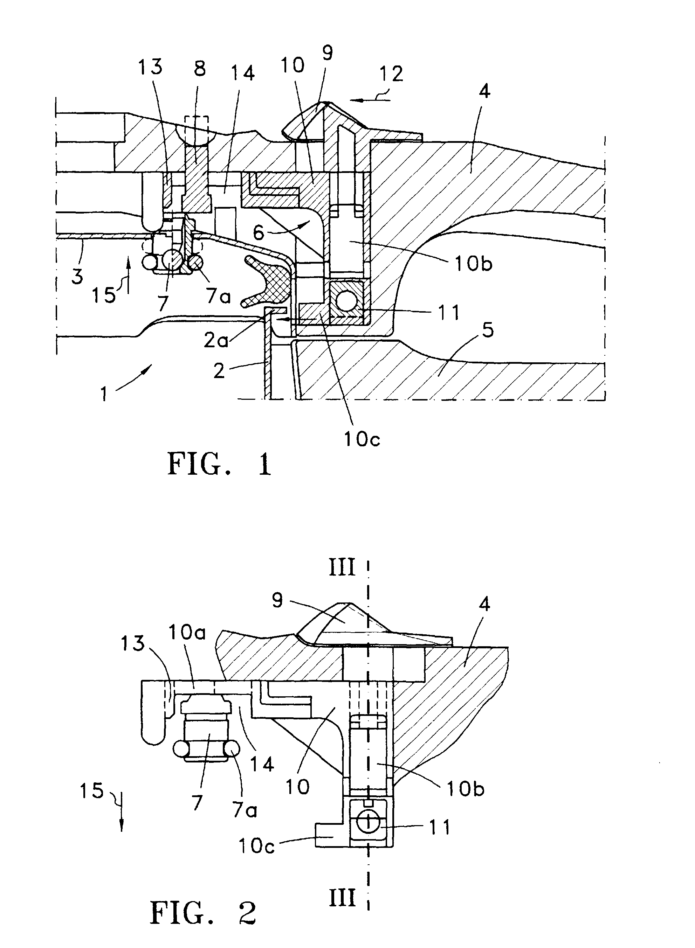

With reference to figures 1 - 6, the pressure-cooker according to the invention comprises the cooking recipient 2, the pressure-cooker cover 3, the upper and lower superimposed handles 4 and 5 respectively and the blocking safety device 1, which includes the blocking mechanism 6 in the upper handle 4, and the stop valve 7 with a sealed steam outlet.

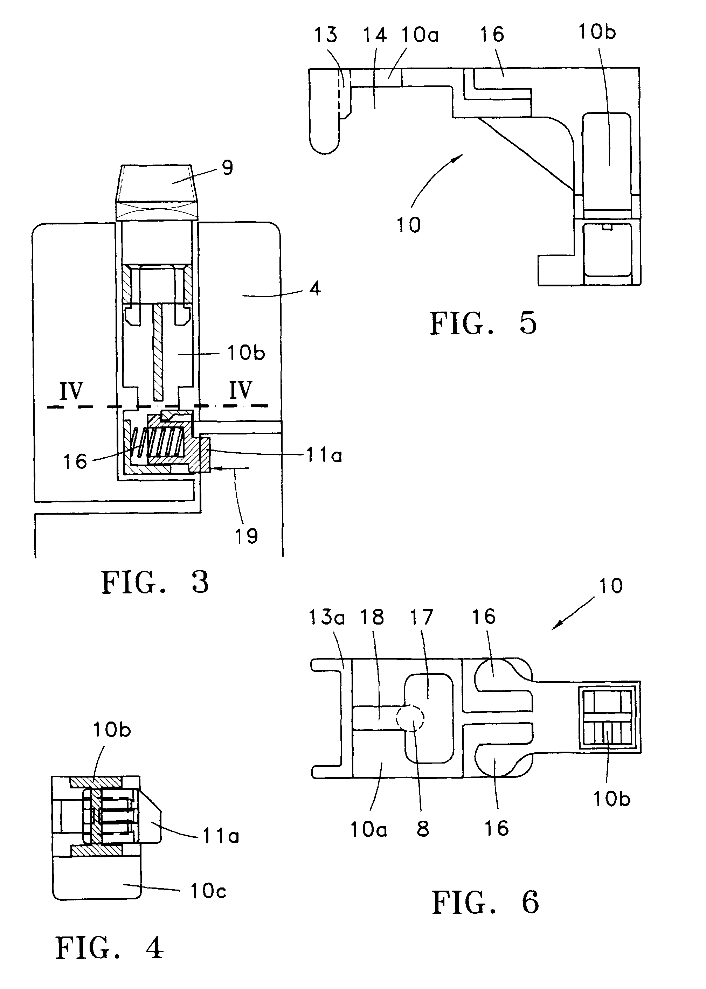

The blocking mechanism 6 (figures 2 - 4) comprises an operating button 9, a blocking member 10 and an alignment catch 11, which conditions operation of the mechanism 6 to the complete superimposition of the handles. The blocking member 10 (figures 5 and 6) is L-shaped, the longer arm 10a being horizontal and the shorter arm lOb vertical, housed inside the upper handle 4. Said catch 11 is fitted in the end of the vertical arm 10b, and has an appendix lla which emerges transversally to press laterally in contact with the lower handle when the cover 3 is turned to close, and which is retracted as the arrow 19 against a internal spring 16 until the handles 4 and 5 are correctly aligned, as it is requested to control button to be pushed.

The blocking mechanism 6 is operated by the thrust of the operating button 9, moving forward along the line of the arrow 12 to block rotation of the cover 3, and backward to release said rotation of the cover and open the pressurecooker. A locking appendix 10c integrated with the member 10 fastens on to the edge 2a of the recipient for preventing the opening rotation of the cover 3 with respect to the recipient 2. The position of button 9, back as in figure 1, is the setting when the cover is free to rotate: that in figure 2 shows when the cover is locked in place.

While the blocking member 10 is back in the release position,its the free end 13 is superimposed, as shown in figure 1, on the body of the valve 7, and its stop 13a in the form of a vertical partition, prevents the valve body 7 from rising and closing off the steam outlet.

To block rotation of the cover during cooking, the upper handle 4 is superimposed on the lower handle 5, and the button 9 is moved as shown by the arrow 12, the blocking member 10 moves forward to its block position (figure 2), and the stop 13a of the blocking member is thus beyond the position of the valve 7, which can now rise along the line of the arrow 15 in figure 1 to close the steam outlet by its seal gasket 7a. As long as there is any residual pressure in the recipient, the body of the valve 7 remains up (figure 2) and its end is inside the hollow 14 of the horizontal arm 10a. At the same time, the body of the valve 7 raises a pressure indicator 8. The blocking member 10 can no longer move backward because its end 13 stops now horizontally up against the body of the valve 7. To guide the indicator 8, the blocking member 10 has a large opening 17 (figure 6) in its longer arm 10a, where the larger-diameter base of the indicator is housed, and the narrower groove 18 through which the indicator rod 8 runs when the blocking member 10 moves back (figure 1).

On its horizontal arm 10a, the blocking member 10 also has two elastic longitudinal lugs 16 with enlarged free ends so that, as they move backward and forward, they meet the protuberances (not shown in the drawing) on the surface of the handle 4, which move said lugs 16 to provide an audible indication of the movement.

## Claims

1. A domestic pressure-cooker of the type with two superimposed handles (4,5) the upper one on the cover (3) and the lower one on the recipient (2), with a safety device (1) to prevent the cover from being opened, comprising a slidable control button (9) which operates a blocking mechanism (6) formed by a movable L-shaped blocking member (10) housed in the upper handle (4), with the longer arm (10a) above and horizontal placed, and a shorter arm (lOb) having an integral locking appendix (10c) for preventing the opening rotation of the cover with respect to the recipient (2), a valve body (7) which rises (15) with the pressure of the steam pressurising the recipient (2) and which, in turn, is interposed into the movement of said blocking member (10), and a pressure indicator rod (8) guided into the blocking mechanism (6), characterised in that the blocking member (10) is made of a single part and in turn incorporates the control button (9) to be horizontally displaced by this latter, and integrates said rotation locking appendix (10c), means (11, 16) provided with an alignment catch (11) emerging laterally for superimposing and aligning the handles (4,5), a free end (13) of the longer arm to be superimposed on the uprising movement of the valve body (7), and guide means (17,18) for the pressure indicator rod (8) which is upward pushed by the valve body (7).

2. The safety device (1) of claim 1, wherein the longer arm (10) of the blocking mechanism has two longitudinal lugs on the top (16) to provide an audible indication of their displacement.

3. The safety device (1) of claim 1, wherein the indicator rod (8) has a wider base and said guide means (17, 18) are a wide opening (17) to house said wider base, and a narrower groove (18) for passing the indicator rod through.

## Patentansprüche

1. Schnellkochtopf mit übereinander angeordneten Henkeln (4, 5), und zwar dem oberen am Deckel (3) und dem unteren am Behälter (2), einer Sicherheitsvorrichtung (1) für die Blockierung der Deckelöffnung, welche einen gleitfähigen Betätigungsknopf (9) umfasst, der eine Blockiervorrichtung (6) betätigt, die von einem beweglichen Blockierteil (10) in "L"-Form mit einem horizontal angeordneten oberen langen Schenkel (10a) und einem kurzen Schenkel (10b) gebildet wird, der einen Blockieransatz (10c) zur Verhinderung der Drehbewegung vom Öffnen des Deckels (3) in Bezug zum Behälter (2) aufweist, einem Ventilkörper (7), der sich mit dem Dampfdruck (15) zur Druckerzeugung im Behälter (2) anhebt und gleichzeitig die Verschiebung des Blockeirteils (10) verhindert, und einer in der Blockiervorrichtung (6) geführten Druckanzeigestange (8), dadurch gekennzeichnet, dass das Blockierteil (10) einstückig hergestellt wird und gleichzeitig den für seine horizontale Verschiebung vergesehenen Betätigungsknopf (9), den Blockieransatz (lOc), seitlich hervortretende, mit Ausrichtungsklinken (11) versehene Mittel (11, 16) für das Übereinanderlegen und Ausrichten der Henkel (4, 5), ein freies Ende (13) des langen Schenkels für die Ünterbrechung der Hubbewegung des Ventilkörpers (7) und Mittel (17, 18) für die Führung des Druckanzeigestange (8) enthält, welche durch den Ventilkörper (7) nach oben geschoben wird.

2. Sicherheitsvorrichtung (1) nach Anspruch 1, bei welcher der lange Schenkel (10) des Blockierteils an seiner oberen Seite zwei längliche Laschen (16) für die Erzeugung eines akustischen Signals bei Verschiebung desselben aufweist.

3. Sicherheitsvorrichtung (1) nach Anspruch 1, bei welcher die Anzeigestange (8) eine Basis grösseren Durchmessers besitzt und die Führungsmittel (17, 18) in einer weiten Aufnahmeöffnung (17) für diese grössere Basis sowie einem schmaleren Spalt (18) für den Durchgang der Anzeigestange (8) bestehen.

## Revendications

1. Autocuiseur ménager du type poignées (4,5) superposées, la poignée supérieure du couvercle (3) et la poignée inférieure du récipient (2), doté d'un dispositif de sécurité (1) pour le blocage de l'ouverture du couvercle, comprenant un bouton de commande (9) coulissant qui actionne un mécanisme (6) de blocage, lequel est formé d'un membre (6) de blocage mobile en L ayant un bras long (10a) horizontal en haut et un bras court (10b) pourvu d'un appendice (10c) de blocage pour empêcher la rotation d'ouverture du couvercle (2) par rapport au récipient (2), d'une chapelle de soupape (7) qui se lève (15) sous la pression de la vapeur pour la pressurisation du récipient (2), et qui s'interpose en même temps au déplacement du membre de blocage (10), et d'une tige (8) indicatrice de la pression conduite dans le mécanisme (6) de blocage, caractérisé en ce que le membre (10) de blocage est moulé d'une seule pièce incorporant un bouton de commande (9) pour le déplacer horizontalement, et intégré dudit appendice (lOc) de blocage, des moyens (11, 16) pourvus d'un cran (11) d'alignement ressortant latéralement pour la superposition et l'alignement des poignées (4, 5), d'une extrémité (13) libre du long bras qui viendra s'interposer sur le mouvement d'élévation de la chapelle de la soupape (7) et de moyens (17, 18) de guidage de la tige indicatrice (8) qui est poussée vers le haut par la chapelle de soupape (7).

2. Le dispositif de sûreté (1) de la revendication 1 où le bras long (10) du membre de blocage a sur sa partie supérieure deux languettes (16) longitudinales pour produire un signal acoustique indiçant son déplacement.

3. Le dispositif de sûreté (1) de la revendication 1 où la tige indicatrice (8) a un plus grand diamètre de base et les moyens (17, 18) de guidage sont une large ouverture (17) pour loger cette plus grande base, et une rainure plus étroite (18) pour le passage de la tige indicatrice (8).
